Europäisches Patentamt

**European Patent Office**

**Office européen des brevets**

(11) Numéro de publication: **0 227 556**
**A1**

(12) **DEMANDE DE BREVET EUROPEEN**

(21) Numéro de dépôt: **86402903.8**

(22) Date de dépôt: **23.12.86**

(51) Int. Cl.⁴: **G 01 D 5/26**
**G 01 F 1/32**

(30) Priorité: **24.12.85 FR 8519111**
**14.08.86 FR 8611767**

(43) Date de publication de la demande:
**01.07.87 Bulletin 87/27**

(84) Etats contractants désignés: **DE ES GB IT**

(71) Demandeur: **FLONIC S.A.**
**12, Place des Etats-Unis**
**F-92120 Montrouge (FR)**

(72) Inventeur: **Janssen, Sylvain**
**38, rue du Bois de Boulogne**
**F-92200 Neuilly-sur-Seine (FR)**

**Wright, Oliver**
**11, rue Vieille du Temple**
**F-75004 Paris (FR)**

(74) Mandataire: **Dronne, Guy**
**Giers Schlumberger 12 Place des Etats-Unis B.P. 121**
**F-92124 Montrouge (FR)**

(54) **Capteur optique de grandeurs physiques.**

(57) Capteur optique de grandeurs physiques et notamment de pression différentielle.

Le capteur de pression comprend un diaphragme déformable (24) qui sépare deux chambres de mesure (26,28) où règnent les pressions P1 et P2. Un conducteur optique (34) est fixé sur le diaphragme (24). Une source lumineuse (40) permet d'envoyer dans le conducteur (34) un faisceau lumineux. Un convertisseur électro-optique (42) permet de détecter l'énergie lumineuse (1) sortant du guide lumineux (34) et donc de la différence des pressions (P1.P2).

FIG.1a

**Description**

CAPTEUR OPTIQUE DE GRANDEURS PHYSIQUES

La présente invention a pour objet un capteur optique pour mesurer des grandeurs physiques.

De façon plus précise la présente invention concerne un capteur mettant en oeuvre des phénomènes optiques pour mesurer des grandeurs physiques et notamment mais non exclusivement une pression, et plus particulièrement la fréquence de modulation d'une pression.

Il existe un certain nombre de cas où l'on souhaite mesurer la fréquence de modulation d'une pression ou plus précisément d'une pression différentielle, sans que la mesure de la valeur de la pression différentielle elle-même soit nécessaire.

C'est notamment le cas des compteurs à tourbillon pour le gaz.

Ce type de compteur, basé sur l'effet Karman, est bien connu. On pourra se reporter au brevet français 2 357 868 pour en avoir une description détaillée. Il suffit de rappeler qu'un tel compteur comprend un obstacle disposé en travers de la conduite dans laquelle s'écoule le fluide dont on veut mesurer le débit. Cet obstacle engendre des tourbillons qui se détachent alternativement de chacun des côtés de l'obstacle disposés sensiblement parallèlement à l'écoulement du fluide. La fréquence de formation de ces tourbillons est proportionnelle à la vitesse du fluide.

Pour mesurer cette fréquence on peut mesurer les variations de la différence des pressions du fluide au voisinage des deux côtés latéraux de l'obstacle. Pour cela, l'obstacle comprend deux conduits qui débouchent respectivement dans ces côtés de l'obstacle. On comprend que dans ce cas c'est la fréquence de modulation de la pression différentielle qui est la grandeur caractéristique et non la valeur, à chaque instant, de la pression différentielle.

Pour mesurer la fréquence de modulation de la pression différentielle on a déjà proposé d'utiliser un capteur comportant une membrane sur les faces de laquelle sont respectivement appliquées les deux pressions dont on veut mesurer la différence. Les déplacements de la membrane sont mesurés par un détecteur à inductances variables.

Un tel détecteur qui implique une circulation de courant électrique est peu satisfaisant dans le cas où le compteur à tourbillon sert à mesurer le débit d'un gaz explosif, car il nécessite alors l'usage d'un boîtier anti-déflagrant.

De plus, fréquemment, il existe une distance non négligeable entre le lieu où est implanté le compteur avec son capteur de pression différentielle et la zone de contrôle où l'on veut disposer de l'affichage de la mesure de débit effectuée par le compteur. Dans le cas du capteur inductif cette information est transmise sous forme d'un signal électrique qui peut être perturbé par des interférences électromagnétiques.

Ce même problème peut se présenter lorqu'on veut mesurer une pression statique à distance, ou d'autres grandeurs physiques telles qu'une force, une accélération, la fréquence de vibration d'une pièce, etc.

Pour remédier à ces inconvénients, un objet de l'invention est de fournir un capteur pour mesurer une grandeur physique , notamment la fréquence de modulation d'une pression, qui ne nécessite pas de circuit électrique ou électronique à proximité immédiate du compteur et qui, de plus, permette une transmission à distance du signal de mesure qui ne soit pas susceptible d'être perturbé par des interférences électromagnétiques.

Pour atteindre ce but, le capteur optique selon l'invention comprend :

- des moyens formant support déformable ;

- des moyens pour appliquer auxdits moyens formant support une déformation par courbure représentative de la valeur de ladite grandeur physique, lesdits moyens formant support comprenant au moins une partie formant un guide lumineux soumis à ladite déformation et présentant une première et une deuxime extrémité entre lesquelles ladite partie formant guide lumineux est sensiblement rectiligne, ladite partie formant guide lumineux comprenant un milieu susceptible de véhiculer la lumière et délimité par une paroi s'étendant entre lesdites deux extrémités, au moins une partie de ladite paroi présentant un pouvoir d'absorption lumineuse et/ou un pouvoir de diffusion lumineuse plus élevés que ledit milieu formant le guide ;

- une source lumineuse pour appliquer à une desdites extrémités un faisceau lumineux ;

- des moyens optiquement disposés en regard de ladite deuxième extrémité pour recueillir au moins une partie du faisceau lumineux transmis par ladite partie formant guide lumineux ; et

- des moyens pour traiter le signal recueilli pour en déduire une caractéristique de la déformation des moyens support.

Selon un mode préféré de réalisation, le capteur optique est un capteur de pression différentielle et les moyens pour appliquer aux moyens support une courbure représentative de la pression différentielle comprennent des moyens pour appliquer de part et d'autre des moyens support les deux pressions dont on veut mesurer la différence, les moyens support constituant alors des moyens formant diaphragme.

En d'autres termes, la différence des pressions appliquées de part et d'autre du diaphragme provoque la courbure de ce diaphragme et dont du guide lumineux qui en fait partie intégrante.

La courbure prise par le guide lumineux modifie de façon très sensible le coefficient de transmission du guide lumineux grâce au fait qu'au moins une partie de la paroi du guide lumineux présente les propriétés énoncées ci-dessus.

Selon un premier type de réalisation, la partie formant guide lumineux est constituée d'un matériau solide transparent.

Selon un second type de réalisation, la partie formant guide lumineux est constituée d'une conducteur creux.

Ainsi, si le guide lumineux est plein (en matériau transparent) le terme paroi employé dans la présente demande se réfère alors à la paroi externe du guide, tandis que lorsque le guide lumineux est creux, le terme paroi se rapporte à la paroi interne du guide.

Enfin, l'invention vise également à remédier au problème résultant des déformations parasites éventuelles du diaphragme résultant de vibrations extérieurs parasites auxquelles serait soumis le dispositif de mesure incorporant le capteur.

A cette fin, le capteur optique comprend
- des premier et second moyens formant support déformable, disposés parallèlement l'un à l'autre, des moyens pour appliquer à chacun des premier et second moyens formant support une déformation par courbure représentative de la valeur de ladite grandeur physique, lesdits premier et second moyens formant support comprenant chacun au moins une partie formant un guide lumineux soumis à ladite déformation et présentant une première et une deuxième extrémité entre lesquelles ladite partie formant guide lumineux est sensiblement rectiligne, ladite partie formant guide lumineux comprenant un milieu susceptible de véhiculer la lumière et délimité par une paroi s'étendant entre lesdites deux extrémités, au moins une partie de ladite paroi présentant un pouvoir d'absorption lumineuse et/ou un pouvoir de diffusion lumineuse plus élevés que ledit milieu formant le guide ;
- au moins une source lumineuse pour appliquer un faisceau lumineux à la première extrémité de chaque guide lumineux ;
- des premier et second moyens optiquement disposés respectivement en regard de chacune desdites deuxième extrémités pour recueillir au moins une partie du faisceau lumineux transmis respectivement par les première et seconde parties formant guide lumineux ; et
- des moyens pour traiter les signaux recueillis pour en déduire une caractéristique de la déforation des moyens support.

D'autres caractéristiques et avantages de l'invention apparaîtront plus clairement à la lecture de la description qui suit de plusieurs modes de réalisation de l'invention, donnés à titre d'exemples non limitatifs et se référant au dessin annexé sur lequel :

   - les figures 1a et 1b illustrent un premier mode de réalisation du capteur optique selon l'invention, la figure 1a étant une vue en coupe en élévation et la figure 1b une vue de dessus en coupe selon la ligne B-B de la figure 1a ;

   - la figure 2 est une courbe qui illustre le fonctionnement du capteur optique selon les figures 1a et 1b ;

   - la figure 3a montre en coupe partielle en élévation une variante de réalisation du capteur des figures 1a et 1b;

   - les figures 3b et 3c montrent en coupe partielle en élévation et en vue partielle de dessus une autre variante de réalisation du capteur selon l'invention ;

   - la figure 4a est une vue partielle d'un capteur optique selon l'invention dans lequel seule une partie de la paroi du guide lumineux est dépolie ;

   - la figure 4b est une courbe qui illustre le fonctionnement du capteur de la figure 4a ;

   - les figures 4c et 4d sont des schémas qui illustrent le fonctionnement du mode de réalisation de la figure 4a du capteur

   la figure 5 montre un autre mode de réalisation du capteur optique selon l'invention dans lequel le guide lumineux est plan ;

   - la figure 6 est une courbe qui illustre le fonctionnement du capteur de la figure 5 ;

   - la figure 7 montre une variante de réalisation du capteur optique de la figure 5 ;

   - la figure 8 montre une autre variante de réalisation du capteur optique de la figure 5 dans laquelle une seule paroi du guide lumineux est dépolie ;

   - la figure 9 montre une courbe qui illustre le fonctionnement du capteur optique selon la figure 8 ;

   - la figure 10a montre une vue partielle en coupe en élévation d'un mode perfectionné de réalisation du capteur de la figure 8 ;

   - la figure 10b montre une courbe qui illustre le fonctionnement du capteur de la figure 10a ;

   - les figures 11a et 11b montrent respectivement en vue de dessus (fig. 1a) et en coupe partielle selon la ligne B-B de la figure 11a (fig. 11b) un autre mode de réalisation d'un capteur optique selon l'invention qui comprend deux guides lumineux en forme de fibre ;

   - la figure 11c est une courbe qui illustre le fonctionnement du capteur otpique de pression selon les figures 11a et 11b ;

   - la figure 12 représente un autre mode de réalisation du capteur optique de pression dans lequel le guide lumineux présente une pré-courbure.

   - les figures 13a et 13b sont des vues en perspective respectivement d'un obstacle pour débitmètre à tourbillon, et d un capteur optique de pression adapté pour être introduit dans ledit obstacle ;

   - les figures 14a et 14b sont des vues en coupe transversale de guides lumineux en forme de fibre particulièrement bien adaptés à la réalisation des capteurs optiques de pression selon les figures 1 à 4, et 11.

   - Les figures 15a et 15b illustrent un autre mode de réalisation de l'invention où le guide lumineux est un tube creux, la figure 15a étant une vue en coupe en élévation, et la figure 15b une vue en coupe selon la ligne II-II de la figure 15a.

- Les figures 16a et 16b illustrent une variante du tube creux à section droite rectangulaire :

- Les figures 17a et 17b montrent une forme de réalisation de l'invention comportant deux diaphragmes déformables, associés chacun à un tube creux :

- Les figures 18a et 18b montrent une variante de réalisation du capteur des figures 17a et 17b utilisant un guide lumineux plein pour chacun des deux diaphragmes :

- La figure 18c est une variante de la réalisation des figures 18a et 18b :

- La figure 19 montre en coupe et en élévation un mode de réalisation d'un capteur de force selon l'invention : et

- la figure 20 montre en vue de dessus un accéléromètre conforme à l'invention.

Afin de mieux faire comprendre l'invention, on va d'abord décrire plusieurs modes de réalisation de capteurs de pression selon l'invention.

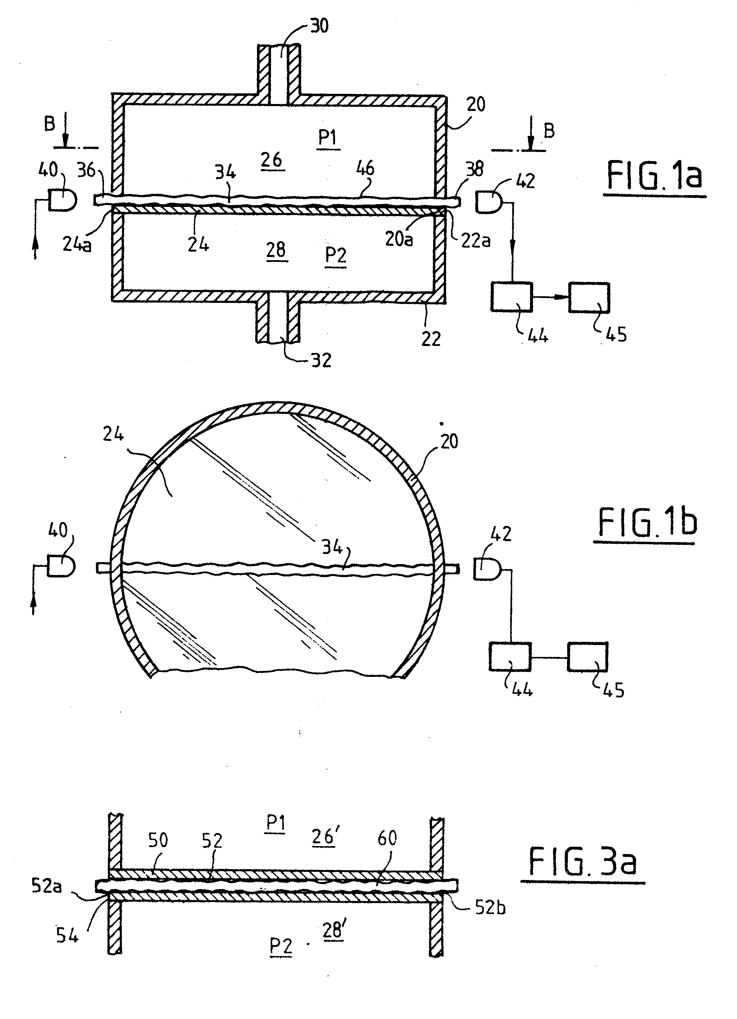

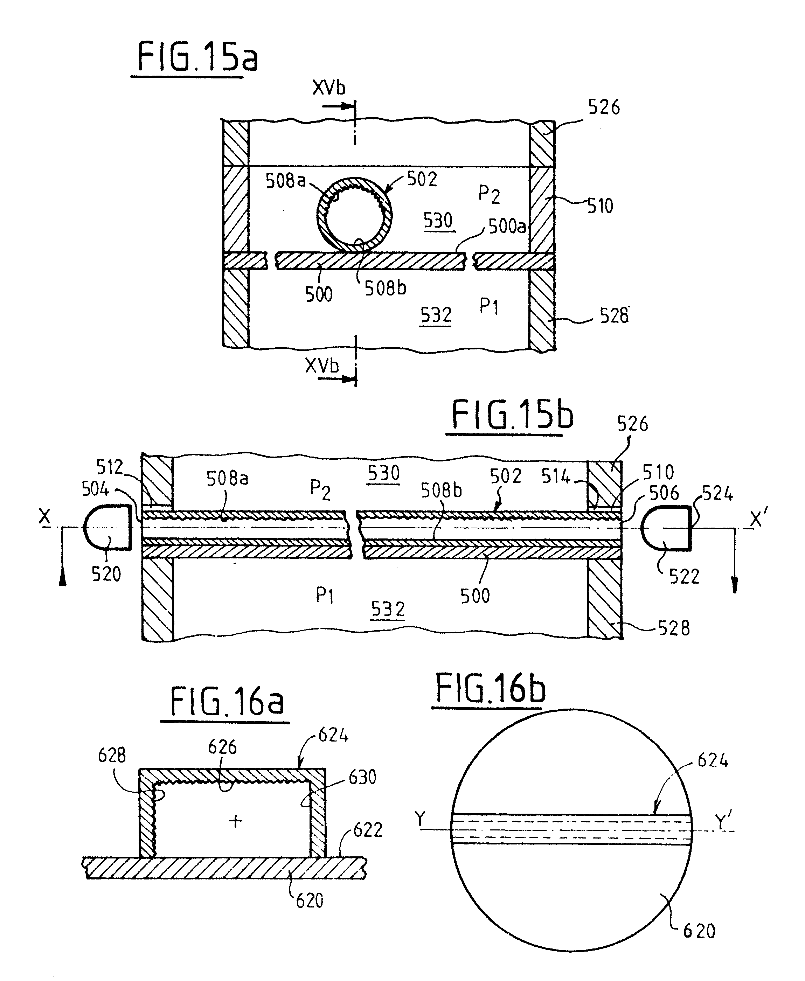

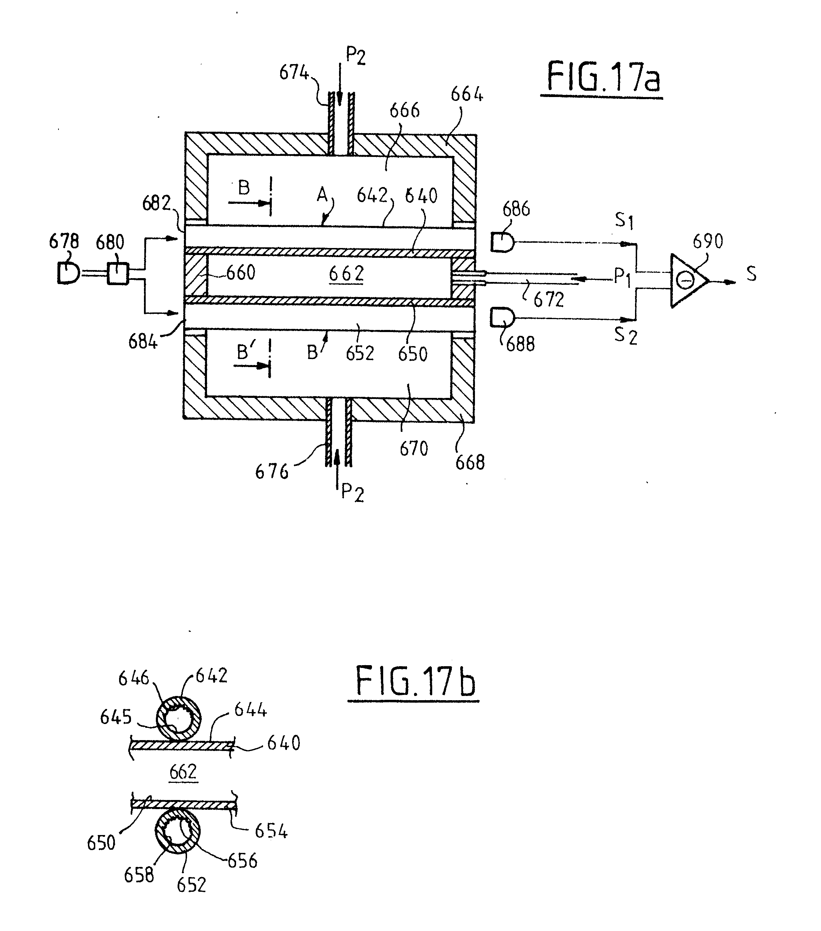

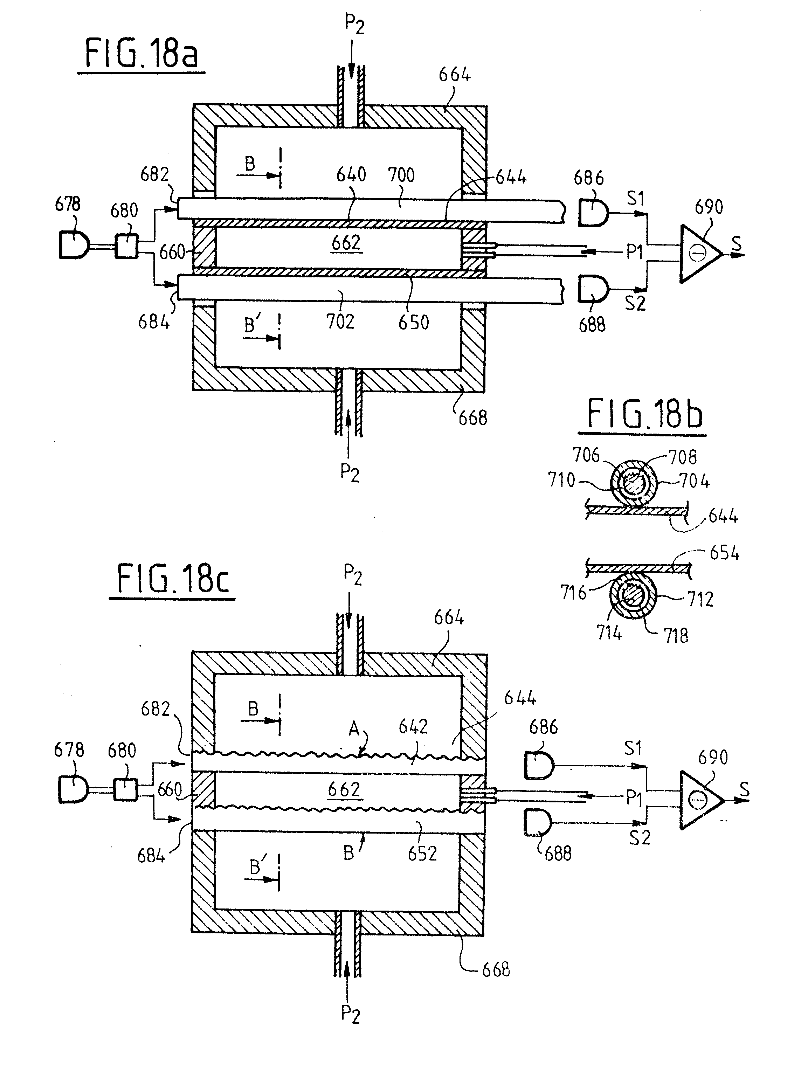

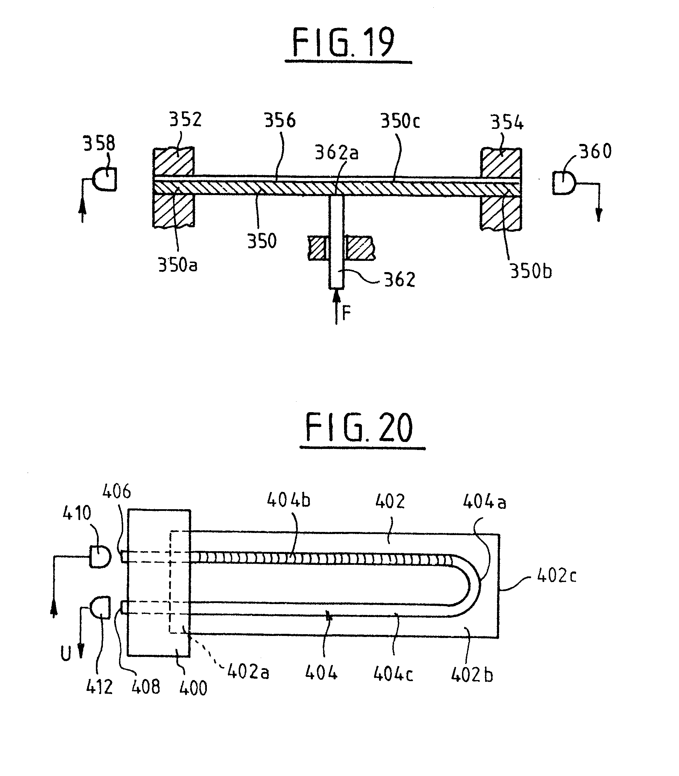

Les figures 1 à 18 sont relatives à un capteur de pression différentielle, tandis que les figures 19 et 20 illustrent respectivement un capteur de force et un accéléromètre. Les figures 1 à 14 représentent plusieurs modes de réalisation d'un capteur dont le guide lumineux est plein, les figures 15 et 16 montrent un capteur dont le guide lumineux est creux, et les figures 17 et 18 illustrent une réalisation à deux diaphragmes respectivement avec un guide lumineux creux et un guide lumineux plein.

Dans le cas d'un capteur optique de pression différentielle, l'élément formant support est un diaphragme déformable et les moyens pour appliquer au diaphragme une déformation représentative de la pression différentielle consistent en deux chambres de mesure séparées par le diaphragme, chaque chambre étant reliée à une des sources de pression dont on veut mesurer la différence.

En se référant tout d'abord aux figures 1a et 1b, on va décrire un premier mode de réalisation d'un capteur optique de pression selon l'invention.

Le capteur est constitué par une enceinte étanche formé par deux demi-enveloppes 20 et 22 et par un diaphragme déformable 24 dont la périphérie 24a est encastrée entre les bords 20a et 22a des demi-enveloppes 20 et 22. Les pièces 20 et 22 sont reliées entre elles par exemple par des brides non représentées qui assurent une liaison étanche entre les bords 20a et 22a des demi-enveloppes et la périphérie 24a du diaphragme 24. Les demi-enveloppes 20 et 22 délimitent avec le diaphragme 24 deux chambres de mesure 26 et 28 séparées l'une de l'autre par le diaphragme 24. Chaque demi-enveloppe est munie d'une conduite 30 respectivement 32 pour introduire respectivement dans les chambres de mesure 26 et 28 des fluides ayant respectivement les pressions P1 et P2. Par exemple les chambres 26 et 28 sont cylindriques et le diaphragme 24 est en forme de disque.

Le capteur comprend de plus un guide lumineux 34, par exemple en forme de fil, fixé sur une face du diaphragme 24 selon un diamètre de celui-ci, de telle manière que les déformations du diaphragme 24, sous l'effet de la différence des pressions P1 et P2 soient intégralement transmises au guide lumineux 34. Les extrémités 36 et 38 du guide traversent de façon étanche la paroi de la demi-enveloppe 20.

Dans la description se référant aux figures 1 à 14 et 18, par guide optique ou lumineux plein, il faut entendre un élément réalisé en un matériau transparent. Selon les exemples de réalisation, le guide lumineux peut avoir la forme d'un fil à section droite circulaire ou rectangulaire, ou la forme d'un disque.

Par ailleurs, l'expression "guide optique" ou "guide lumineux" ne doit pas être confondue avec l'expression "fibre optique" dont on sait que la fonction principale est de transmettre un faisceau lumineux avec des pertes aussi réduites que possible, sauf dans les cas où il est expressément indiqué que le guide optique est constitué par une fibre optique.

Le guide lumineux plein 34 est, par exemple, collé sur le diaphragme 34. Une source lumineuse 40 envoie un faisceau lumineux à l'extrémité 36 du guide lumineux et un convertisseur opto-électrique 42 disposé en regard de la deuxième extrémité 38 du guide lumineux 34 recueille le signal lumineux effectivement transmis par celui-ci et le convertit en un signal électrique représentatif du signal lumineux reçu. Ce signal est traité par le circuit 44 associé au dispositif d'affichage 45.

Selon l'exemple des figures 1, le guide lumineux plein, présente une section droite circulaire et une paroi latérale cylindrique 46 qui est entièrement dépolie, c'est-à-dire que cette paroi 45 présente des micro-aspérités. Dans ce mode de réalisation, le diaphragme 34 est plan, lorque la différence des pressions est nulle. En conséquence le guide lumineux 34 est rectiligne lorsque la différence de pression est nulle. On appellera lo l'intensité lumineuse recueillie par le détecteur 42 lorsque la différence de pression est nulle.

Lorsqu'une différence de pression (P1-P2) apparaît de part et d'autre du diaphragme 24, celui-ci prend une courbure dont la flèche y est représentative de la différence de pression. Le guide lumineux 34 prend la même courbure et donc la même flèche y. La lumière qui arrive sur la paroi dépolie diffuse à l'extérieur et à l'intérieur du guide lumineux. Lorsque la courbure du guide lumineux augmente, sous l'effet de la différence de pression, une fraction de plus en plus importante du faisceau lumineux d'entrée est soumise au phénomène de diffusion, les parois dépolies, en se déformant, obturant de plus en plus le chemin optique du faisceau lumineux. Il en résulte que, dans ce cas, au fur et à mesure de l'augmentation de la différence de pression, l'énergie lumineuse reçue par le détecteur 42 diminue.

Les phénomènes de diffusion de la lumière sur une surface dépolie sont décrits en détail dans l'article "Light reflection by rough surface" de A.S. Toporets dans Sov.J. Opt. Technol. 46.(1) .1979, p 35.

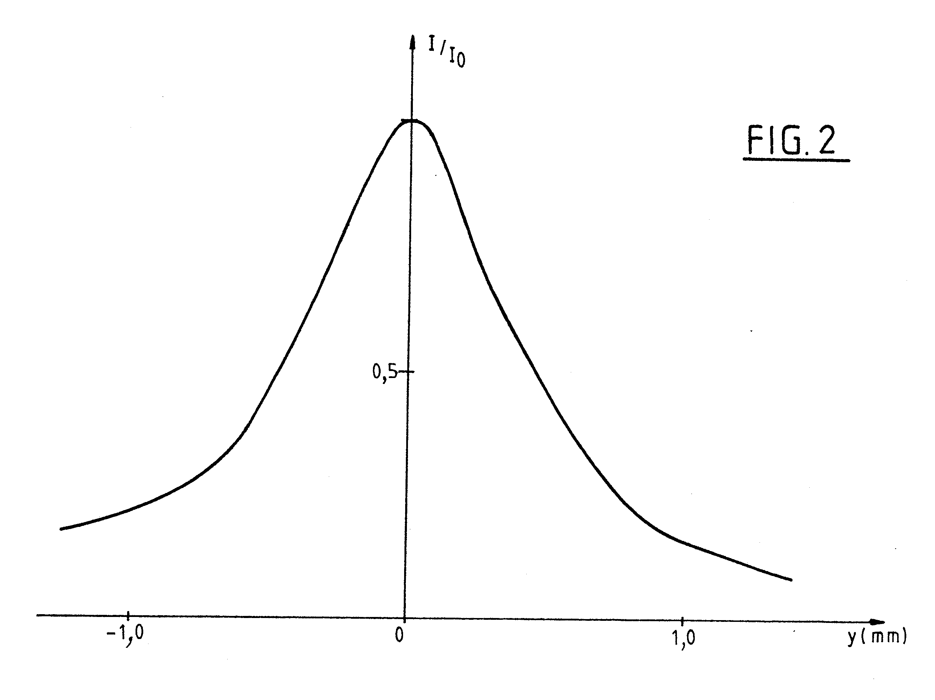

La figure 2 montre "l'intensité" lumineuse recueillie à la sortie du guide lumineux 34 dont la paroi est entièrement dépolie. Le guide lumineux plein 34 a la forme d'une fibre dont la longueur déformable (non encastrée) est égale à 50 mm et dont le diamètre vaut 1 mm. Il est réalisé à l'aide du matériau commercialisé sous la marque Plexiglass. La source lumineuse 40 est du type lambertien et émet une lumière de longueur d'onde égale à 0,88mm. En ordonnées, on a porté le rapport entre l'intensité lumineuse reçue Io lorsque le guide 34 est rectiligne et l'intensité lumineuse reçue I, et en abscisses le déplacement y du point médian du guide lumineux. On obtient une courbe symétrique pour les déplacements positif (P1 < P2) et négatifs (P1 > P2).

On voit qu'ainsi, en traitant dans le circuit 44 le signal électrique délivré par le convertisseur 42, il est possible de mesure la pression différentielle P1-P2. En particulier si la différence de pression P1-P2 varie dans le temps, il est possible de mesurer la fréquence de variation de la pression différentielle. Ce cas se présente notamment lorsque le capteur de pression est associé à un débitmètre à vortex, chacune des chambres de mesure 26 et 28 étant reliée à une des deux prises de pression latérales de l'obstacle par une conduite.

Si, pour des raisons de sécurité, on veut éviter que des circuits électroniques soient disposés à proximité des chambres de mesure contenant les fluides (cas de gaz inflammables ou explosifs), il est possible de prolonger les extrémités 36 et 38 du guide lumineux 34 par des fibres optiques. Une des fibres sert à transmettre la lumière entre la source 40 et l'extrémié 36 du guide lumineux et l'autre fibre optique servant à transmettre, avec le minimum de pertes, le signal lumineux recueille entre l'extrémité 38 du guide lumineux et la convertisseur optoélectrique 42.

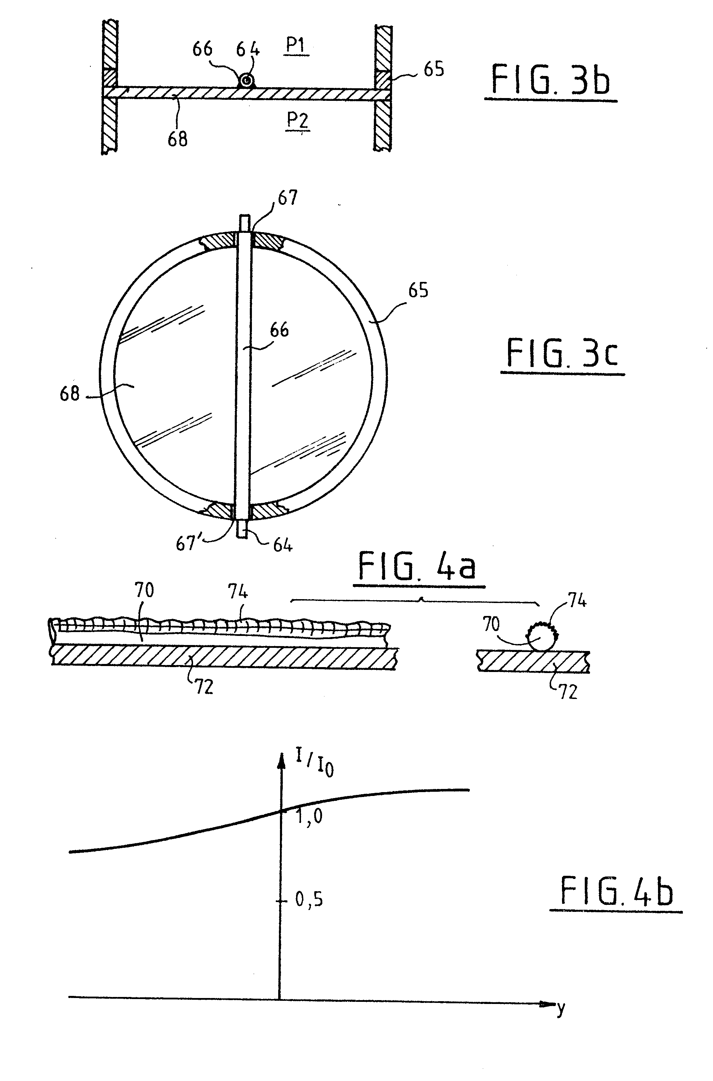

Comme on l'a indiqué précédemment, les extrémités du guide lumineux 34 doivent traverser de façon étanche la paroi latérale de la chambre 26. Cela ne soulève pas de problème particulier si la pression dans la chambre 26 n'est pas trop élevée. Dans le cas contraire, il est souhaitable d'utiliser un des montages représentés sur les figures 3a et 3b.

Dans le cas de la figure 3a le diaphragme déformable 50 qui sépare les chambre de mesure 26' et 28' est percé d'un trou 52 disposé selon un diamètre du diaphragme 50 et dont les extrémités 52a et 52b débouchent dans la périphérie 54 du diaphragme. Un guide lumineux 60 est introduit dans le trou 52 et il y est collé de telle manière que les déformations du diaphragme 50 soient intégralement transmises au guide lumineux 60. Celui-ci a sa paroi latérale dépolie comme le guide lumineux 34 de la figure 1a.

On comprend ainsi que les problèmes d'étanchéité soient plus aisément résolus, puisque c'est entre la périphérie du diaphragme 24 et les parois des chambres qu'il faut réaliser l'étanchéité.

Les figures 3b et 3c illustrent une autre variante de montage du guide lumineux sur le diaphragme.

Un guide lumineux plein 64 est introduit dans un tube métallique 66 disposé selon un diamètre d'un diaphragme déformable 68. Le tube 66, destiné à protéger mécaniquement le guide lumineux 64, est soudé sur une face du diaphragme 68 et l'espace à l'intérieur du tube 66 non occupé par le guide lumineux 64 est rempli de colle de telle manière que les déformations du diaphragme 68 dues à la pression différentielle soient intégralement transmises au guide lumineux. Le diaphragme 58 est surmonté par un anneau 65 en surépaisseur par rappoort au reste du diaphragme.

L'anneau 65 est muni de deux encoches 67 et 67' disposées selon un même diamètre du diaphrgme. Les extrémités du tube 66 de protection sont logées dans les encoches 67 et 67'. L'espace restant libre dans les encoches 67 et 67' est rempli de soudure, lors du soudage de l'anneau 65 sur la périphérie du diaphragme. Il suffit d'assurer l'étanchéité entre le rebord l'ensemble formé par l'anneau 65 et le diaphragme et les demi-enveloppes. Celà peut être aisément obtenu par soudage de ces deux pièces, ou à l'aide de brides non représentées sur les figures.

En référence à la figure 2, on voit que, lorsque le guide lumineux est entièrement dépoli c'est-à-dire sur toute la paroi latérale, la réponse du capteur est la même pour deux déplacements y de même amplitude mais de signes opposés. Elle montre également que la sensibilité de la mesure pour les faibles déplacements (autour de y = o) est très mauvaise, ce qui est défavorable dans un très grand nombre de cas. De plus, on ne peut faire la distinction entre les différences de pression positives et négatives. Pour remédier à celà, selon le mode de réalisation représenté sur la figure 4a, le guide lumineux 70, qui est fixé sur le diaphragme 72 et qui est de section droite circulaire, n'a qu'une moitié de sa paroi latérale dépolie. Il s'agit, par exemple, de la moitié supérieure 74. c'est-à-dire celle qui n'est pas collée sur le diaphragme 72. L'autre moitié de la paroi reste polie.

La surface dépolie 74 a donc la forme d'une surface semi-cylindrique lorsque le guide lumineux 70 est au repos, c'est-à-dire rectiligne.

On comprend que, dans ce cas, la courbe de la figure 4b représentant le rapport entre l'intensité lumineuse recueillie à la sortie du guide lumineux (I) et l'intensité lumineuse recueillie lorsque le guide lumineux est droit Io (y = o) en fonction de la flèche (y) du guide lumineux, n'est plus symétrique par rapport à la position de repos correspondant à l'égalité des pressions (y = ò). La courbe a l'allure indiqué sur la figure 4b dans le cas où la source lumineuse est du type lambertien.

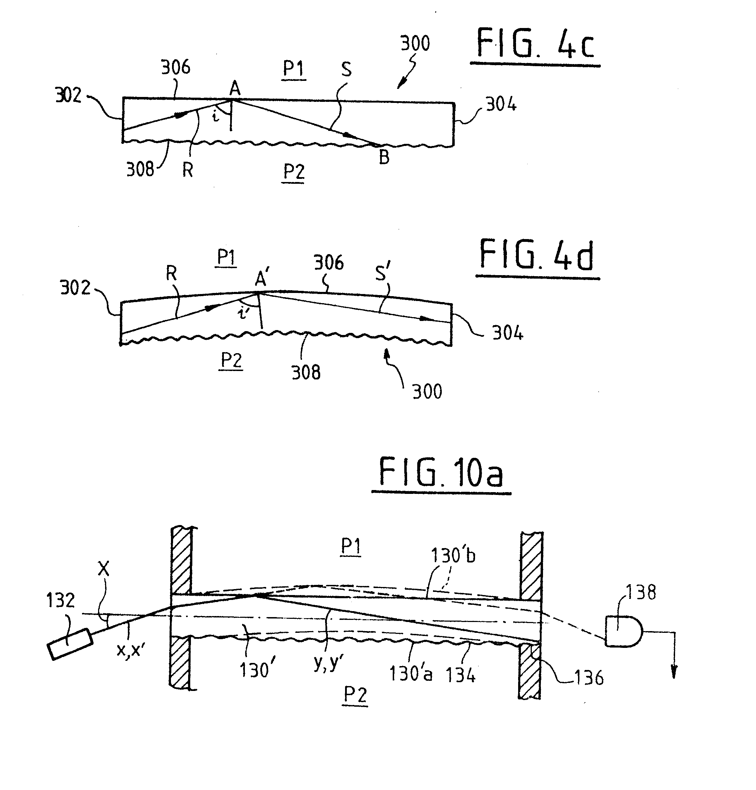

En se référant aux schémas des figures 4c et 4d, on comprendra mieux pourquoi l'intensité lumineuse recueillie I augmente pour les valeurs positives de la flèche y (P2 > P1). Sur la figure 4c on a représenté schématiquement un guide optique 300 en forme de fibre présentant deux faces d'extrémité 302 et 304 polie, une paroi demi-cylindrique 306 également polie. et une deuxième paroi demi-cylindrique 308 qui est dépolie.

Sur la figure 4c on a fait figurer un rayon lumineux R qui frappe la paroi réfléchissante 206 au point A avec un angle d'incidence i. tel que le rayon réfléchi S frappe la paroi dépolie 308 au point B.

La figure 4d montre le même guide 300 mais présentant une flèche positive due à ce que la pression P2 est supérieure à la pression P1. Si l'on considère le même rayon lumineux R. celui-ci frappe la paroi réfléchissante 306 en un point A′ différent du point A en raison de la courbure prise par le guide lumineux, le point A′ étant plus proche de la face de sortie 304 que le point A. Pour la même raison l'angle d'incidence i′ est supérieur à l'angle i. En conséquence, le rayon réfléchi correspondant S′ sort directement par la face de sortie 304 sans subir de réflection. Comme, de plus, l'influence de la courbure de la paroi dépolie 308 n'a que peu d'influence sur l'énergie lumineuse transmise, le résultat global de la courbure du guide lumineux est d'augmenter l'énergie lumineuse transmise par rapport à l'énergie lumineuse transmise en l'absence de courbure. Cela reste vrai pour des courbures pas trop grandes du guide.

Dans la description précédente le guide lumineux plein a la forme d'une fibre de section circulaire ou encore de section droite rectangulaire. Dans ce dernier cas, il est nécessaire qu'une des faces latérales au moins soit dépolie ou absorbante.

Selon l'invention, le guide lumineux plein peut également avoir forme d'une plaque réalisée en un matériau transparent.

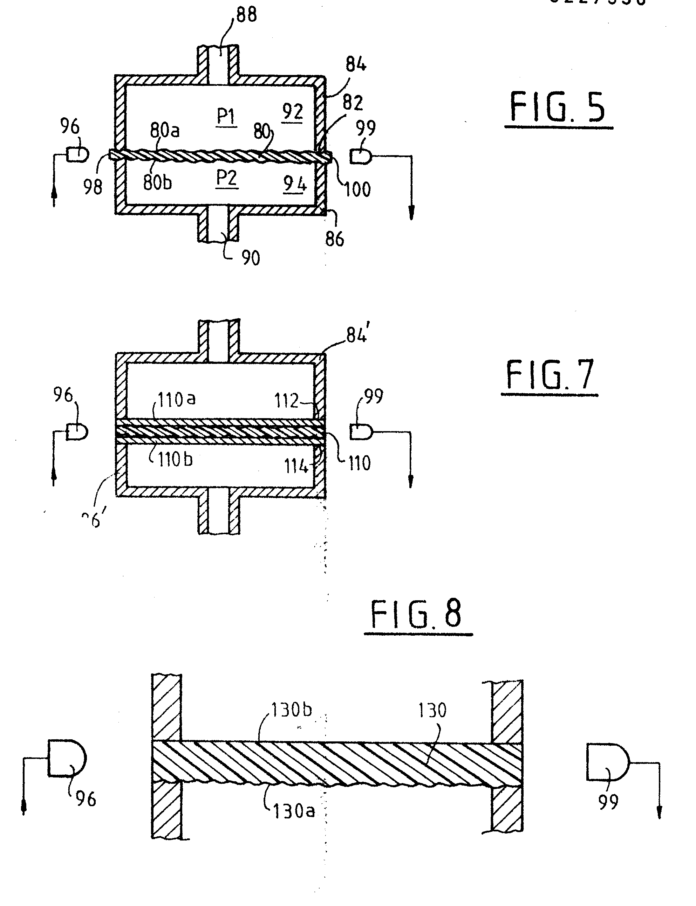

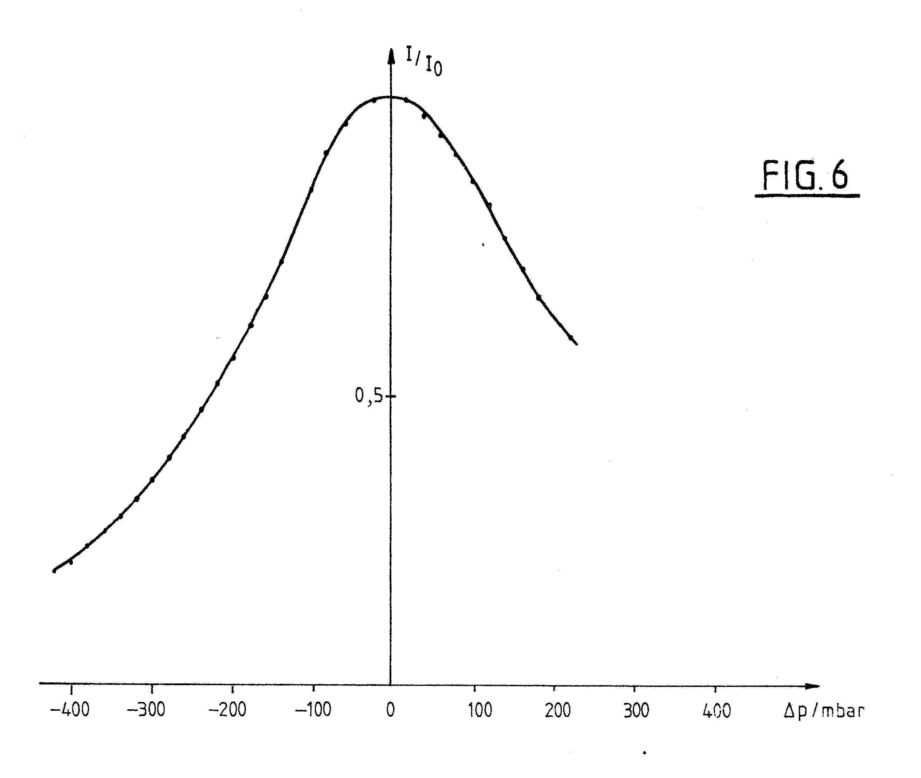

Sur la figure 5, on a représenté un capteur de pression selon l'invention dans lequel le diaphragme déformable 80 est constitué par un disque réalisé en un matériau transparent dont les deux faces 80a et 80b sont dépolies. La périphérie 82 du disque 80 est enserrée de façon étanche entre deux demi-enveloppes 84 et 86 munies chacune d'une buse d'introduction du fluide 88 et 90. Le diaphragme 80 sépare deux chambres de mesure 92 et 94. Une source lumineuse 95 est disposée en regard d'une zone 98 du bord du diaphragme 80 et un convertisseur opto électrique 99 est disposé en regard d'une zone 100 du bord du diaphragme 80, les zones 98 et 100 étant diamétralement opposées. De préférence, les zones 98 et 100 sont polies, alors que le reste du bord latéral 98′ du disque absorbe la lumière. On comprend que selon ce mode de réalisation le disque 80 joue à la fois le rôle du diaphragme qui est déformé par la différence de pression et le rôle de guide lumineux.

Sous l'effet de la différence des pressions, le diaphragme 80 prend une courbure qui modifie l'intensité lumineuse transmise par le disque transparent 80. La figure 8 montre l'intensité recueillie I/Io en fonction de la différence de pression $\Delta p$ ($\Delta p$ = P2-P1) exprimée en mbar pour un diaphragme/guide lumineux ayant les caractéristiques suivants : il est réalisé dans le matériau commercialisé sous la marque Plexiglass ; il a la forme d'un disque de diamètre 50 mm et d'épaisseur 1 mm. Dans ce cas, la source lumineuse est du type lambertien. La courbe est sensiblement symétrique et a la même allure que celle de la figure 2 relative à un guide lumineux en forme de fibre.On comprend que la similitude des courbes est due au fait que les parois dépolies planes 80a et 80b jouent un rôle analogue aux deux parois demi-cylindriques dépolies du guide lumineux de la figure 1.

Le mode de réalisation de la figure 5 n'est utilisable que si les pressions à mesurer sont compatibles avec les propirétés mécaniques du diaphragme en matériau transparent.

Pour étendre la gamme d'utilisation du capteur, la figure 7 montre un autre mode de mise en oeuvre de l'invention. Selon ce mode de réalisation, le guide lumineux plein a la forme d'un disque 110 qui est serré entre deux diaphragmes circulaires métalliques 112 et 114. Ces diaphragmes sont par exemple en acier et ont une épaisseur de l'ordre de 0,3mm. En outre, on retrouve les demi-enveloppes 84′ et 86′ limitant les chambres de mesure. On comprend ainsi que les efforts mécaniques développés par la pression différentielle sont absorbés par les deux plaques métalliques qui protègent le guide lumineux 110. En revanche, les déformations provoquées par la différence de pression sont intégralement transmises au guide lumineux formé par le disque transparent 110. Selon ce mode de réalisation, les deux parois 110a et 110b sont dépolies. On obtient ainsi une courbe de réponse sensiblement identique à celle qui est représentée sur la figure 6.

La figure 8 montre un autre mode de réalisation du capteur visant à améliorer la faible sensibilité du capteur pour les valeurs de déformations (y) voisines de zéro, et selon lequel le guide lumineux plein 130, qui est un disque en matériau transparent, n'est dépoli que sur sa face 130a et polie sur l'autre face 130b.

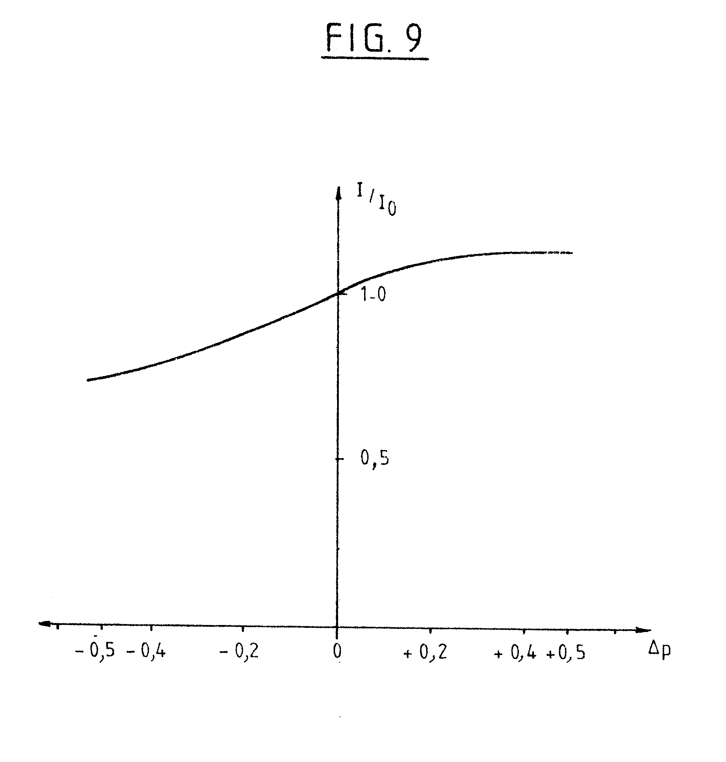

La figure 9 montre la courbe de réponse d'un tel capteur. En abscisses, on a porté la différence des pressions * p, et en ordonnées, le rapport entre l'intensité lumineuse (Io) recueillie à la sortie du guide lumineux lorsque la différence de pression est nulle et l'intensité lumineuse (I) recueillie pour une différence de pression * p. Dans l'exemple illustré par la figure 9, la source lumineuse est du type lambertien émettant un rayonnement de longueur d'onde 0,88 * m. Le disque 130 a un diamètre de 50 mm et une épaisseur égale à 1,5 mm, et il est réalisé dans le matériau commercialisé sous la marque Plexiglass.

La figure 10a illustre un mode perfectionné de réalisation du capteur de la figure 8 pour augmenter très notablement la sensibilité du capteur pour les faibles valeurs de pression différentielle. Le guide lumineux 130′ est identique au guide lumineux 130 de la figure 8. Dans ce cas, la source lumineuse 132 (par exemple un laser Hélium-Néon) émet un faisceau lumineux dont l'axe fait un angle X voisin de 4° avec le plan médian du diaphragme 130′ au repos. Au moins la partie de la paroi latérale du disque vis-à-vis du laser doit présenter un poli. Le faisceau lumineux a par exemple un diamètre égal à 0,5 mm. En outre, la paroi 130′a du diaphragme 130′ qui est dépolie, est de plus recouverte d'une couche 134 de matériau absorbant, par exemple de peinture noire. L'axe xx′ du faisceau émis par la source 132, est dirigé de telle manière que, lorque le diaphragme est au repos, l'axe yy′ du faisceau réfléchi par la paroi non dépolie 130′b du diaphragme 130′, frappe la paroi dépolie 130′a à sa périphérie 136. Un convertisseur opto électrique permet de recueillir la partie du faisceau lumineux transmis.

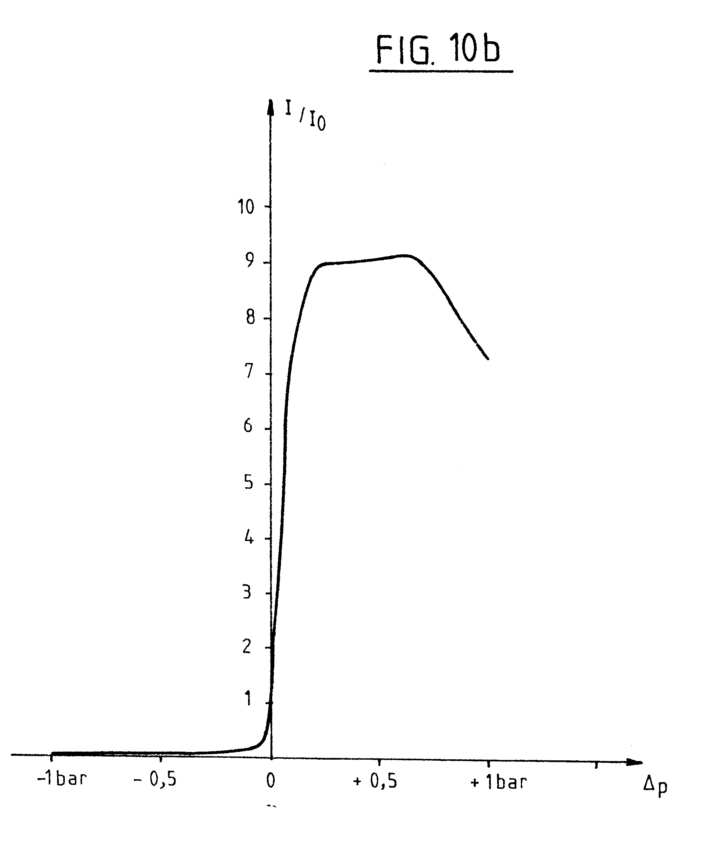

La figure 10b montre la courbe de réponse du capteur de la figure 10a qui vient d'être décrit. Sur cette figure on a porté en abscisses la différence de pression p et en ordonnées le rapport I/Io tel qu'il a été défini précédemment. La courbe de la figure 10b montre qu'on obtient une très grande sensibilité pour les faibles valeurs de pression différentielle positive (P1 < P2) et négative (P1 > P2).

6

Sur la figure 10a on a représenté un pointillés la paroi non dépolie 130'b du diaphragme 130 lorsque celui-ci est soumis à une déformation. On voit que dans ce cas l'axe du faisceau réfléchi par la paroi 130b (représenté en pointillés) coupe la face polie de sortie 136 du guide lumineux 130'.

On comprend ainsi que l'intensité lumineuse recueillie augmente très rapidement en fonction de la flèche y du diaphragme c'est-à-dire en fonction de la différence Δp de pression. Au contraire, avec une différence de pression négative (P2 < P1), l'axe du faisceau réfléchi par la paroi réfléchissante 130'b est déplacé vers la gauche de la figure, ce qui fait qu'une partie encore plus importante du faisceau appliqué à l'entrée du guide lumineux n'est pas transmise.

Un tel mode de réalisation du capteur convient particulièrement bien lorsqu'il s'agit de mesurer la fréquence de modulation d'une pression différentielle de faible valeur. En d'autres termes, un tel capteur est bien adapté pour être utilisé avec un débitmètre à tourbillons. Il va de soi que le laser pourrait être remplacé par une autre source lumineuse convenablement collimatée.

En outre, le capteur optique de pression de la figure 10a peut être encore amélioré en disposant le disque transparent 130' entre deux diaphragmes métalliques déformables comme cela a été expliqué en liaison avec la figure 7.

Il faut souligner que dans les exemples décrits en liaison avec les figures 1 à 7, la variation significative de la transmission de la lumière sous l'effect de la déformation du guide lumineux était obtenue en depolissant une paroi ou les deux parois du guide lumineux. Dans l'exemple de réalisation décrit en liaison avec la figure 10a, la paroi 130'a du guide lumineux est non seulement dépolie mais encore recouverte d'une couche 134 de matériau absorbant, tel qu'une peinture noire.

Il faut comprendre que dans les exemples de réalisation des figures 1 à 7 la où les parois du guide lumineux qui sont dépolies pourraient être aussi recouvertes d'un matériau absorbant la lumière. Selon encore un autre mode de réalisation la ou les parois dépolies pourraient être remplacées par une couche de matériau absorbant.

L'article "Specular reflectance of optical black coatings in the Far infrased" par S.M. Smith publié dans la revue App. Optics Vol 23, 1984 p. 2311 décrit différents matériaux absorbant les faisceaux lumineux ainsi que les propriétés de ces matériaux.

Dans les exemples de réalisation décrits précédemment où une seule paroi du guide lumineux est dépolie, la réponse du capteur présente une région de linéarité limitée au voisinage d'une déformation nulle du guide lumineux.

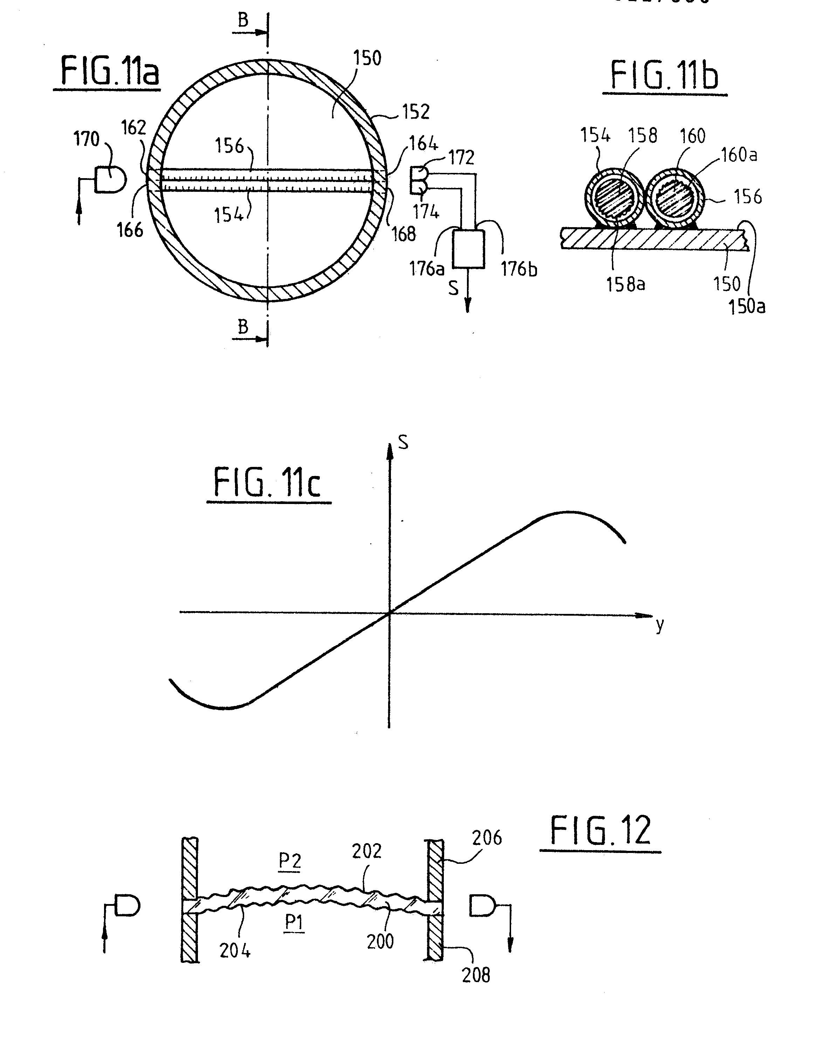

Les figures 11a et 11b illustrent un autre mode de réalisation de l'invention qui permet d'augmenter la plage de linéarité. Ceci est particulièrement avantageux lorsqu'on veut mesurer la valeur de la pression différentielle statique et non pas seulement la fréquence de modulation de cette pression différentielle.

Selon ce mode de réalisation, le capteur comprend un diaphragme métallique déformable 150 qui sépare les deux chambres de mesure. Sur la figure 11a, seule la paroi latérale 152 de la chambre supérieure est représentée. Sur une face 150a du diaphragme 150, sont fixés deux tubes métalliques déformables 154 et 156 qui s'étendent sensiblement selon un diamètre du diaphragme 150 en forme de disque. Les tubes 154 et 156 sont également soudés entre eux comme le montre la figure 11b. Les extrémités des tubes 154 et 156 traversent de façon étanche la paroi 152 de la chambre de mesure supérieure.

De préférence, comme cela a été expliqué en liaison avec la figure 3c, chaque tube 154 et 156 contient un guide lumineux plein en forme de fil 158 et 160. Les guides lumineux plein 158 et 160 s'étendent sur toute la longueur des tubes. Ils sont rendus solidaires des tubes à l'aide d'une colle convenable. La paroi semi-cylindrique inférieure 158a du guide 158 est dépolie alors que sa paroi supérieure reste polie. Au contraire, la paroi semi-cylindrique supérieure 160a du guide 160 est dépolie alors que son autre paroi demeure polie. Chaque guide lumineux plein 154, 156 comporte deux extrémités 162, 164 et 166, 168. On comprend qu'ainsi, sous l'effet de la différence des pressions régnant dans les deux chambres de mesure, la courbure du diaphragme 150 est intégralement transmise aux guides lumineux 158 et 160 et que lorsque le diaphragme est déformé une des parois dépolies 158a, 160a est concave alors que l'autre paroi dépolie 160a, 158a est convexe.

Le capteur comprend une source lumineuse 170 qui applique un faisceau lumineux aux extrémités 162 et 166 des guides lumineux et deux détecteurs opto électriques 172 et 174 qui reçoivent respectivement le faisceau lumineux sortant des extrémités 164 et 168 des guides lumineux. Les sorties des détecteurs 172 et 174 sont reliées aux entrées 176a et 176b d'un circuit de traitement 176 qui effectue la différence entre les signaux délivrés par les détecteurs 172 et 174. Sa sortie 176c délivre un signal de mesure S.

La courbe de la figure 11c donne la forme de signal S apparaissant à la sortie du circuit 176 en fonction de la flèche y prise par le diaphragme 150 sous l'effet de la différence des pressions règnant de part et d'autre de ce dernier. La courbe représentant la valeur du signal S en fonction de la flèche y est symétrique par rapport à l'origine O des axes de référence. Elle montre qu'on obtient une bonne linéarité pour de faibles valeurs de y de part et d'autre de la valeur zéro.

La figure 12 montre encore un autre mode de réalisation du capteur optique de pression. Le guide lumineux plein est constitué par un disque 200 en matériau transparent qui est dépoli sur ses deux parois principales 202 et 204. Le disque 200 est encastré entre les deux demi-enveloppes 206 et 208 formant les parois des chambres de mesure de telle manière qu'il présente déjà une très légère courbure lorsque les pressions P1 et P2 sont égales. Cette courbure est au plus égale à cinq fois l'épaisseur du guide lumineux dans la direction où les pressions sont appliquées. En outre. on retrouve la source lumineuse 210 et le convertisseur opto-électrique 212. Lorsque la valeur de P1-P2 augmente, la courbure du guide lumineux augmente et l'énergie lumineuse recueillie par le détecteur 212 diminue. Lorsque la pression P2 est supérieure à la pression P1 et que la différence P2-P1 augmente. la courbure du guide lumineux 200 diminue et l'énergie lumineuse reçue augmente. La courbure peut devenir nulle et même prendre un signe contraire. Dans ce cas l'énergie lumineuse reçue par le détecteur 212 passe par un maximum et diminue.

La courbe de réponse du capteur est celle qui est représentée sur la figure 6. l'origine des différences de pression ΔP étant décalée vers la gauche par rapport à la position O de la figure 6.

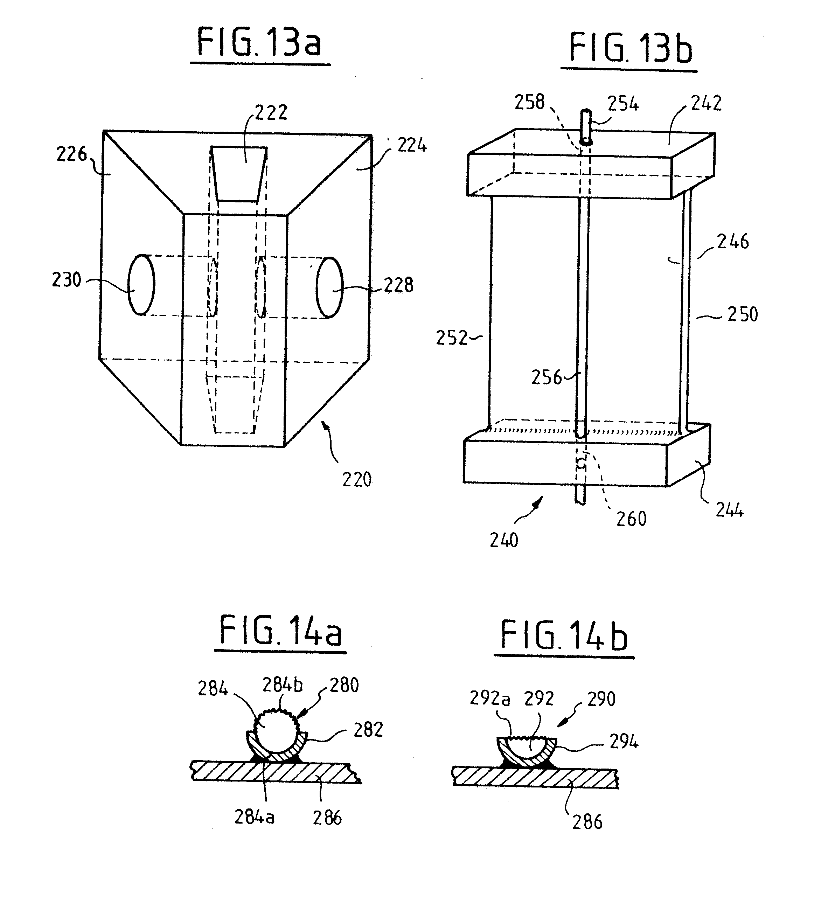

La figure 13b représente un autre mode de réalisation du capteur optique de pression spécialement conformé pour pouvoir être introduit directement dans un obstacle de débitmètre à tourbillon.

La figure 13a représente un obstacle 220 pour débitmètre à tourbillon qui a une section droite trapézoïdale. L'obstacle comporte un évidement 222 disposé selon le sens de sa longueur et dont la section droite est rectangulaire. Les deux faces latérales 224 et 226 de l'obstacle 220, comportent des orifices de prise de pression 228 et 230 qui débouchent dans l'évidement 222.

Le capteur de pression 240 comprend deux pièces d'extrémité 242 et 244 reliées entre elles par une plaque mince déformable 246 de forme générale rectangulaire.

Dans un plan perpendiculaire à celui de la plaque 246, les pièces d'extrémité 242 et 244 ont des dimensions sensiblement égales aux dimensions correspondantes de l'évidement 222 de l'obstacles 220. Lorsque le capteur 240 est mis en place dans l'évidement 222, les deux extrémités de celui-ci sont obturées par les pièces d'extrémité 242 et 244. Ainsi l'évidement 222 est divisé par la plaque déformable 246 en deux chambres de mesure. Chacun des orifices de prise de pression 228, 230 débouche dans une de ces chambres de mesure. Il en résulte que le diaphragme déformable formé par la plaque 246 est soumis à la différence des pressions à mesurer. Il est important de souligner que le diaphragme 246 est encastré à ses deux extrémités 242 et 244 mais que ses deux bords longitudinaux 250 et 252 sont libres. Il existe un faible jeu entre les bords 250 et 252 de la plaque 246 et la paroi interne de l'évidement 222.

Le capteur 240 comprend également un guide lumineux plein 254 qui loge dans un tube métallique de protection 256. La paroi du guide lumineux 254 peut présenter une des propriétés déjà énoncées. De préférence, une seule des parois semi-cylindriques du guide est dépolie et recouverte d'une couche de peinture noire absorbante.

Le tube de protection 256 est soudé sur une face de la plaque 246, parallèlement aux bords 250 et 252, et est disposé à égale distance de ces derniers. Les extrémités 258 et 260 du tube 256 traversent, par des orifices, les pièces d'extrémité 242 et 244.

Les flexions alternées de la plaque 246 sous l'effet des variations de la pression différentielle qui lui est appliquée sont détectées comme cela a été expliqué, par exemple en liaison avec la figure 1a.

A propos des différents modes de réalisation du capteur optique, il faut ajouter que pour avoir un effet de variation de transmission utilisable, il faut que le guide lumineux vérifie certaines relations géométriques. Si on appelle h la dimension latérale minimale du guide lumineux et L la longueur du guide lumineux selon la direction de propagation de la lumière soumise à la déformation, il faut que

$$\frac{h}{L} > \theta_{diff}$$

et

$$\frac{h}{L} > \theta$$

avec $\theta$ égal à la plus petite des deux valeurs $\theta$ crit et $\theta$ abs. $\theta$ représente le complément de l'angle d'incidence sur la surface du guide dépolie et/ou absorbante en dessous duquel le faisceau incident n'est plus absorbé et/ou diffusé d'une manière efficace. En outre il est supposé que h est très inférieur à L. $\theta$ diff est une valeur qui est liée aux dimensions du guide lumineux et à la longueur d'onde de la lumière. On peut poser $\theta$ diff $= \frac{\lambda}{h}$. Cette limite est due aux effets de diffraction de la lumière. crit est une valeur qui est liée à la longueur d'onde ($\lambda$) de la lumière utilisée et à la hauteur quadratique des rugosités de la paroi dépolie ($\delta$). En première approximation on peut poser $\theta$ crit $= \frac{\lambda}{\delta}$.

Enfin $\theta$ abs est une valeur qui est liée aux propriétés absorbantes de la paroi du guide lumineux lorsque celle-ci ou une partie de celle-ci est recouverte par un matériau absorbante. $\theta$ abs dépend des indices de réfraction du guide lumineux et de la couche absorbante, ainsi que du coefficient d'absorption de ladite couche.

Il faut également ajouter que, le guide lumineux plein étant fixé sur un support, qu'il s'agisse d'un fil rectiligne ou d'une plaque. il est nécessaire de prendre certaines précautions pour que les propriétés des parois du guide lumineux plein ne soient pas latérées par le support ou par le mode de fixation.

Dans le cas d'un guide lumineux plein en forme de fil dont la paroi réfléchissante doit être fixe sur un support. il peut être utile d'adopter une des solutions représentées sur les figures 14a et 14b.

Sur la figure 14a le guide lumineux plein est constitué par une fibre optique 280. La gaine 282 de la fibre optique 280 est conservée sur la paroi semi-cylindrique 284a de l'âme 284 de la fibre qui doit être

8

réfléchissante. Le guide lumineux 280 est fixé sur le diaphragme 286 par la gaine restante 282. La paroi 284b de l'âme est dépolie. Une solution équivalente est représentée sur la figure 14b. La fibre optique 290 avec son âme 292 et sa gaine 294 est coupée en deux dans le sens de sa longueur selon un plan axial. La portion d'âme 292a mise à nu est dépolie.

Lorsque c'est la paroi dépolie du guide lumineux plein qui doit être fixée sur un support il est préférable de recouvrir la paroi dépolie d'une couche de matériau absorbant. On évite ainsi que l'indice optique du matériau servant à réaliser la fixation ne vienne altérer l'effet de diffusion produit par les rugosités de la paroi dépolie.

Dans le cas d'un guide lumineux plein plan, dont la face non dépolie doit être directement au contact du support métallique, il es préféreable d'usiner la face du support tournée vers le guide lumineux pour qu'elle présente un "poli optique". Les propriétés réfléchissantes de la paroi non dépolie du guide lumineux plein sont ainsi conservées.

Les figures 15a et 15b montrent un autre mode de réalisation d'un capteur de pression différentielle selon l'invention, dans lequel le guide lumineux est un tube creux (alors que les réalisations des figures 1 à 14 montrent un guide lumineux plein).

Le capteur comprend un diaphragme déformable 500 de forme circulaire et d'épaisseur réduite. Il est part exemple réalisé en acier. Sur la face supérieure 500a du diaphragme 500 est soudé un guide lumineux, constitué en l'espèce d'un tube creux 502 dont l'axe $\overline{XX}'$ s'étend selon un diamètre du diaphragme 500. Les deux extrémités 504 et 506 de tube creux 502 sont ouverte. La paroi interne 508 du tube, qui est cylindrique dans l'exemple considéré comporte une partie supérieure demi-cylindrique 508a qui est dépolie, c'est-à-dire pourvue d'aspérités et une partie inférieure demi-cylindrique 508b qui est polie, c'est-à-dire qui présente des bonnes propriétés réfléchissantes. Sur la périphérie du diaphragme 500 est fixée de façon étanche un manchon 510 cylindrique dont la hauteur est légèrement supérieure au diamètre du tube 502. Le manchon 510 comporte deux encoches 512 et 514 diamétralement opposées dans lesquelles sont engagées les extrémités du tube 502.

Vis-à-vis de l'extrémité 504 du tube 502 est disposée une source lumineuse 520 qui émet un faisceau lumineux pénétrant dans le tube 502 par son extrémité 504. En face de l'extrémité 506 du tube 502 est disposé un détecteur photosensible qui délivre sur sa sortie 524 un signal électrique dont l'intensité est représentative de l'intensité lumineuse qu'il a recueillie à la sortie du tube 502. L'ensemble formé par le diaphragme 500, le manchon 510 et le tube 502 est enserré par deux demi-enveloppes cylindriques 526 et 528. Les liaisons entre d'une part le manchon 510 et la demi-enveloppe 526 et d'autre part le diaphragme 500 et la demi-enveloppe 528 sont étanches. Les demi-enveloppes limitent ainsi de part et d'autre du diaphragme 500 deux chambres 530 et 532 dans lesquelles on peut fair règner les pressions P2 et P1 dont on veut mesurer la différence.

On comprend que, lorque les pressions P1 et P2 sont égales, le diaphragme 500 ne présente pas de courbure.Il en va de même du tube 502. Au contraire, si les pressions P1 et P2 sont différentes, le diaphragme 500 et donc l'axe XX' du tube 505 prennent une courbure dont la flèche (y) dépend de la différence des pressions et dont le signe dépend de la localisation (chambres 530 ou 532) où il règne la pression la plus élevée.

Sur les figures 16a et 16b, on a représenté une variante de réalisation du tube creux des figures 15a et 15b. Le capteur comprend un diaphragme déformable 620 semblable au diaphragme 500 de la figure 15a, mais dont la face 622 est polie afin d'être optiquement réfléchissante. Sur la face 622 du diaphragme 620 est fixés une pièce allongée 624 ayant en section droite la forme d'un U. l'axe longitudinal YY' de la pièce 624 est disposé selon un diamètre du diaphragme 620. La pièce 624 et la portion en regard de celle-ci du diaphragme 620 forment un tube creux à section droite rectangulaire. La face interne 626 de la pièce opposée au diaphragme 620 ainsi que la paroi latérale 628 sont dépolies. En revanche, la face latérale 630 reste polie. On obtient ainsi un guide optique creux à section droite rectangulaire dont la moitié de la surface interne est dépolie et dont l'autre moitié est polie et donc réfléchissante.

Ce capteur présente des caractéristiques très semblables à celles du capteur des figures 1a et 1b (guide lumineux plein).

Un avantage des capteurs décrits précédemment en référence aux figures 15 et 16, est que le tube et le diaphragme peuvent avantageusement être fabriqués avec le même matériau, par exemple de l'acier. Il en résulte que les variations de température auxquelles le capteur peut être soumis en cours d'utilisation n'induiront aucun phénomène de dilatation thermique différentielle susceptible d'affecter le fonctionnement du capteur.

Par ailleurs. de façon générale. et quelle que soit la forme de réalisation du guide lumineux, si le capteur est monté dans un ensemble susceptible d'être soumis à des vibrations importantes, ces vibrations peuvent provoquer des déformations par courbure du diaphragme. Ces déformations parasites se traduiraient par une modulation parasite du signal lumineux recueilli par le détecteur optique.

Sur les fgures 17 et 18, on a représenté un autre exemple de réalisation de l'invention permettant de s'affranchir des problèmes de vibrations mécaniques parasites, et comprenant respectivement des guides lumineux creux (figures 17a, 17b) et des guides lumineux pleins (figures 18a, 18b).

En référence aux figures 17a. 17b. le capteur est constitué par deux sous-ensembles de mesure A et B. Le sous-ensemble A comprend un diaphragme déformable 640 en forme de disque et un guide lumineux, constitué dans l'exemple des figures 17a et 17b d'un tube creux 642 à section droite circulaire fixé sur la face 644 du diaphragme 640 selon un diamètre de celui-ci. Comme le montre mieux le figure 17b la demi-paroi interne 645 la plus proche du diaphragme 640 est polie alors que l'autre demi-paroi interne 646 est dépolie. Le sous-ensemble de mesure B comprend également un diaphragme déformable 650 et un tube creux 652 à section droite circulaire fixé sur la face 654 du diaphragme 650. La demi-paroi interne 656 la plus proche du diaphragme 650 est dépolie et l'autre demi- paroi cylindrique 658 est polie.

Les périphéries des faces des diaphragmes 640 et 650 dépourvues de tubes sont fixées de façon étanche à une paroi cylindrique 660. ce qui définit une chambre intermédiaire 662.La périphérie de l'autre face du diaphragme 640 est fixé à une première demi-enveloppe cylindrique 664 qui définit ainsi une première chambre d'extrémité 666. et la périphérie de l'autre face du diaphragme 650 est fixé à une deuxième demi-enveloppe cylindrique 668 ce qui définit une deuxième chambre d'extrémité 670. La paroi cylindrique 660 est munie d'une première buse 672 pour l'introduction d'un fluide à la pression P1 dans la chambre intermédiaire 662. et les demi-enveloppes 664 et 668 sont respectivement munies de buses 674 et 676 pour introduire un fluide à la pression commune P2 dans les chambres d'extrémité 666 et 670.

Le système comprend en outre une source lumineuse 678 et un diviseur de faisceau 680 pour appliquer aux extrémités 682 et 684 des tubes 642 et 652 des faisceaux lumineux identiques. Le système comprend également deux détecteurs lumineux 686 et 688 qui recueillent respectivement les faisceaux lumineux transmis par les tubes 642 et 652 et les convertissent en des signaux électriques S1 et S2. et un circuit soustracteur 690 dont les entrées sont reliées aux sorties des détecteurs lumineux 686 et 688 pour délivrer un signal de mesure S.

Si l'on considère le sous-ensemble A, il est soumis à la différence de pression P2-P1 et il se comporte comme le capteur de la figure 15a. Le signal S1 a donc la forme représentée sur la figure 4b. De même, le sous-ensemble de mesure B est soumis à la même différence de pression ,mais avec y remplacé par -y et se comporte comme le capteur de la figure 15a. Le signal S2 a donc la forme représentée sur la figure 4b en remplaçant P2-P1 par P1-P2. Si l'on choisit les diaphragmes 640 et 650 pour qu'ils présentent la même courbe de déformation en fonction de la différence de pression, les courbes représentatives de signaux S1 et S2 sont symétriques par rapport à l'axe des intensités .Il en résulte que le signal S = S1-S2 a une courbe représentative qui passe par l'origine O et est antisymétrique par rapport a l'axe des intensités. On comprend également que, si l'ensemble du capteur est soumis à un choc ou une vibration, les signaux S1 et S2 sont modifiées de la même manière dans la région prôche de l'origine O. En conséquence, le signal S n'est pas modifié dans cette région.

Les figures 18a et 18b montrent une variante de réalisation des figures 17a et 17b.

Le capteur optique est identique à celui qui est représenté sur les figures 5a et 5b à l'exception des conducteurs lumineux. Les sous ensembles de mesure A et B comprennent les diaphragmes 640 et 650 sur lesquels sont fixés des conducteurs lumineux 700 et 702 constitués chacun d'un guide lumineux plein introduit dans un tube creux de protection. Le conducteur lumineux 700 comprend un tube de protection 704 fixé sur la face 644 du diaphragme 640 selon un diamètre de celui-ci. A l'intérieur du tube 704 se trouve un guide lumineux plein 706 à section droite circulaire, qui est solidaire du tube 702 pour prendre les mêmes courbures que celui-ci. La demi-paroi externe 708 du conducteur 706 qui est la plus éloignée du diaphragme 640, est dépolie alors que l'autre demi-paroi externe 710 reste polie.

Le conducteur lumineux 702 comprend un tube de protection 712 qui est fixé sur la face 654 du diaphragme 650 selon un diamètre de celui-ci.A l'intérieur du tube 712 est placé un guide lumineux plein 714 à section droite circulaire qui est solidaire du tube 712 pour subir les mêmes déformations que lui. La demi-paroi externe 716 du conducteur optique 714 qui est la plus proche du diaphragme 650 est dépolie alors que l'autre demi-paroi externe 718 reste polie. Le reste du capteur est identique à celui qui est représenté sur les figures17a et 17b. Pour les éléments inchangés on a repris les mêmes références numériques sur les figures 18a et 18b.

Par rapport au mode de réalisation des figures 17a et 17b, on comprend que les tubes 704 et 712 servent uniquement à protéger mécaniquement les guides lumineux pleins 706 et 714. Ces derniers sont réalisés en un matériau transparent.

De plus, on comprend que, fonctionnellement, il y a équivalence entre le fait qu'une partie de la paroi externe du guide lumineux plein 706 ou 714 soit dépolie, et le fait que la même partie de la paroi interne des guides lumineux creux constitués par les tubes 642 et 652 soient dépolis.

Le signal présent à la sortie du soustracteur a sensiblement la même forme que celui qui est représenté sur la figure 11c, où y est à remplacer en abscisse par P2-P1. La mesure ainsi effectuée est sensiblement indépendante des vibrations auxquelles le capteur est soumis.

Sur les figures 17a, 17b, 18a et 18b, chaque guide lumineux est représenté sous la forme d'un conduit (plein ou creux) rectiligne allongé, disposé selon un diamètre du diaphragme correspondant.

La figure 18c montre une variante dans laquelle, chaque guide lumineux 642,652 est formé d'une plaque (en forme de disque (constituée d'un matériau transparent, à l'instar de la réalisation montrée sur la figure 5. Chaque guide lumineux comprend une paroi dépolie et/ou recouverte de peinture noire, chaque guide forme lui-même un diaphragme déformable. Les éléments de la figure 18c identiques ou similaires à ceux des figures 18a et 18b portent les mêmes références.

Les modes particuliers de réalisation de capteurs selon l'invention qui viennent d'être décrits. concernent des capteurs de pression. On va décrire ci-après des capteurs optiques selon l'invention pour mesurer d'autres grandeurs physiques.

La figure 19 montre un capteur de force selon l'invention.

Il comprend une plaque métallique déformable 350 dont les extrémités 350a et 350b sont encastrées dans

10

deux éléments fixes 352 et 354. Sur la face 350c de la plaque 350 est fixé un guide lumineux 356 disposé selon le sens de la longueur de la plaque 350.

Le guide lumineux 356 peut être d'un des types décrits précédemment. Il peut s'agir d'un conducteur lumineux plein, soit en forme de fibre, soit en forme de plaque en matériau transparent, auquel cas il est préférable qu'une deuxième plaque métallique soit disposée au-dessous du guide lumineux. Il peut s'agir également d'un guide lumineux creux en forme de tube creux.

Si le guide lumineux 356 est plein, il peut être dépoli sur une ou sur ses deux parois et/ou recouvert d'un matériau absorbant la lumière sur une ou sur ses deux parois. Une source de lumière 358 est disposée en regard de l'extrémité 350a du guide lumineux 356, tandis qu'un convertisseur opto-électrique 360 reçoit l'énergie lumineuse sortant par l'extrémité 350b du guide lumineux. Un organe mobile 362 dont l'extrémité 362a est appliquée au centre de la plaque 300 transmet la face à mesurer.

L'organe mobile 362 imprime à la plaque 350 une courbure qui est une fonction de la force F à mesurer. Il est important que l'extrémité 362a de l'organe mobile 362 communique à la plaque 350 une courbure régulière sans introduire de micro-courbures localisées dans la zone de contact. Le guide lumineux 356 prend la même courbure. Comme on l'a déjà expliqué précédemment, l'énergie lumineuse reçue par le détecteur 360 est une fonction de la courbure de la plaque 350. Il en résulte que la valeur du signal électrique T délivré par le détecteur 360 est une mesure de la force F.

La figure 20 montre un accéléromètre selon l'invention en vue de dessus.

Il comprend un bâti 400 dans lequel est encastrée une extrémité 402a d'une plaque métallique allongée 402. La courbure de la plaque 402 est représentative de l'accélération à laquelle est soumis l'accéléromètre, l'accélération étant appliquée perpendiculairement au plan de la figure 20. Une fibre optique 404 est fixée sur la face 402b de la plaque 402. La fibre 404 a une forme générale en U. La partie courbe 404a est disposée à proximité du bord libre 402c de la plaque 402. Les branches 404b et 404c sont disposées selon la longueur de la plaque 402, et on a référencé 406 et 408 leurs extrémités. Une source lumineuse 410 est disposée en face de l'extrémité 406 de la fibre 402, alors qu'un détecteur opto-électrique 412 est disposé en face de l'extrémité 408 de la fibre 402.

La branche 404b a, en section transversale, la forme qui est représentée sur la figure 14a. En d'autres termes la partie supérieure de la gaîne de la fibre optique est enlevée et la paroi de l'âme de la fibre ainsi mise à nu est dépolie et, de préférence, recouverte d'un matériau absorbant la lumière.

Sous l'effet de l'accélération, la plaque 402 prend une courbure qui est représentative de la valeur de l'accélération. Comme on l'a expliqué précédemment, sous l'effet de la courbure, le signal électrique U délivré par le détecteur 412 est une mesure de l'accélération.

Il va de soi que d'autres capteurs conformes à l'invention peuvent être réalisés pour mesurer d'autres grandeurs physiques qui provoquent une courbure de l'élément support dont la valeur est représentative de l'amplitude de la grandeur physique.

## Revendications

1. Capteur optique d'une grandeur physique caractérisé en ce qu'il comprend :
- des moyens formant support déformable, des moyens pour appliquer auxdits moyens formant support une déformation par courbure représentative de la valeur de ladite grandeur physique, lesdits moyens formant support comprenant au moins une partie formant un guide lumineux soumis à ladite déformation et présentant une première et une deuxième extrémité entre lesquelles ladite partie formant guide lumineux est sensiblement rectiligne, ladite partie formant guide lumineux comprenant un milieu susceptible de véhiculer la lumière et délimité par une paroi s'étendant entre lesdites deux extrémités, au moins une partie de ladite paroi présentant un pouvoir d'adsorption lumineuse et/ou un pouvoir de diffusion lumineuse plus élevés que ledit milieu formant le guide ;
- une source lumineuse pour appliquer à une desdites extrémités un faisceau lumineux ;
- des moyens optiquement disposés en regard de ladite deuxième extrémité pour recueillir au moins une partie du faisceau lumineux transmis par la partie formant guide lumineux ; et
- des moyens pour traiter le signal recueilli pour en déduire une caractéristique de la déformation des moyens support.

2. Capteur optique selon la revendication 1, caractérisé en ce que la partie formant guide lumineux est constituée d'un matériau solide transparent, et dont la paroi externe présente un pouvoir d'absorption lumineux et/ou un pouvoir de diffusion lumineux plus élevés que le reste du guide.

3. Capteur optique selon la revendication 1, caractérisé en ce que la partie formant guide lumineux est constituée d'un conducteur creux dont au moins une partie de la paroi interne présente un pouvoir de diffusion lumineux plus élevé que celui du reste de ladite paroi.

4. Capteur optique selon l'une des revendications 1 à 3, caractérisé en ce que ladite partie de la paroi des moyens formant guide lumineux est revêtue d'une couche d'un matériau absorbant la lumière.

5. Capteur optique selon l'une quelconque des revendications 1 à 3, caractérisé en ce que ladite partie de la paroi des moyens formant guide lumineux est dépolie.

6. Capteur optique selon l'une quelconque des revendications 1 à 5, pour mesurer une différence de pression, caractérisé en ce que lesdits moyens formant support comprennent des moyens formant un diaphragme déformable et en ce que lesdits moyens pour appliquer ladite déformation par courbure comprennent des moyens pour appliquer de part et d'autre desdits moyens formant diaphragme les pressions dont on veut mesurer la différence.

7. Capteur optique selon la revendication 6. caractérisé en ce que lesdits moyens formant support présentent un plan moyen lorsque ladite différence de pression est nulle et en ce que lesdits moyens formant guide lumineux présentent deux portions de paroi sensiblement parallèles audit plan moyen. au moins une partie d'une seule desdites deux portions de paroi étant dépolie et/ou revêtue d'un matériau absorbant.

8. Capteur optique selon la revendication 2. caractérisé en ce que ledit guide lumineux a la forme d'un fil plein à section droite circulaire rectiligne et fixé sur une face dudit support selon un diamètre de ce dernier. et en ce que la portion de paroi externe dépolie et/ou revêtue d'un matériau absorbant représente une moitié de ladite paroi externe limitée par un plan parallèle au plan moyen du support et passant par l'axe dudit guide lumineux.

9. Capteur optique selon la revendication 3, caractérisé en ce que ledit guide lumineux est constitué d'un tube creux à section droite circulaire rectiligne et fixé sur une face dudit support selon un diamètre de ce dernier, et en ce que la portion de paroi interne dépolie et/ou revêtue d'un matériau absorbant représente une moitié de ladite paroi interne limitée par un plan parallèle au plan moyen du support et passant par l'axe dudit guide lumineux.

10. Capteur optique selon la revendication 2, caractérisé en ce que ledit guide lumineux plein a la forme d'une plaque présentant deux faces allongées et sensiblement parallèles entre elles, et qui est fixée sur une des faces dudit support, et en ce que ladite portion de paroi externe dépolie et/ou revêtue d'un matériau absorbant comprend une seule des deux faces de ladite plaque.

11. Capteur optique selon l'une des revendications 8 à 10, caractérisé en ce que ladite source lumineuse comporte des moyens pour appliquer à ladite extrémité du guide lumineux un faisceau lumineux collimaté dont l'axe est incliné par rapport au plan de symétrie dudit guide lumineux parallèle au plan moyen dudit diaphragme et coupe la portion de paroi non dépolie et/ou non absorbante en un point tel que l'axe du faisceau lumineux réfléchi correspondant coupe, lorsque ledit guide lumineux n'est pas courbé, la portion de paroi dépolie et/ou absorbante en un point proche de ladite deuxième extrémité dudit guide lumineux.

12. Capteur optique selon l'une des revendications 8 ou 9, caractérisé en ce que lesdits moyens formant guide lumineux comprennent en outre un deuxième guide lumineux, sensiblement identique au premier guide, et fixé sur ladite face desdits moyens formant diaphragme parallèlement audit premier guide lumineux, ledit deuxième guide lumineux présentant une portion de paroi dépolie et/ou revêtue d'un matériau absorbant qui correspond à la portion de paroi dudit premier guide lumineux non dépolis et/ou non revêtue d'un matériau absorbant, extrémité desdits guides lumineux un faisceau lumineux, en ce que les moyens optiques récepteurs comprennent deux récepteurs lumineux recueillant chacun le faisceau lumineux apparaissant à la deuxième extrémité d'un desdits guides lumineux, et en ce que lesdits moyens de traitement comprennent des moyens pour effectuer la différence entre les signaux délivrés par lesdits récepteurs lumineux.

13. Capteur optique selon l'une quelconque des revendications 6 ou 8, caractérisé en ce que le ou lesdits guides lumineux pleins en forme de fil sont entourés par un tube de protection déformable, ouvert à ses deux extrémités, et en ce que le ou lesdits tubes de protection sont fixés sur lesdits moyens formant diaphragme.

14. Capteur optique selon la revendication 10, caractérisé en ce que ledit guide lumineux plein en forme de plaque est disposé entre deux plaques déformables de telle manière que les déformations par courbure appliquées auxdites plaques déformables par les pressions soient intégralement transmises audit guide lumineux plein.

15. Capteur optique selon l'une des revendications 1 ou 2, caractérisé en ce que lesdits moyens formant support et lesdits moyens formant guide lumineux consistent en une plaque en matériau transparent de forme générale circulaire encastrée à sa périphérie.

16. Capteur optique d'une grandeur physique caractérisé en ce qu'il comprend :

- des premier et second moyens formant support déformable, disposés parallèlement l'un à l'autre,

- des moyens pour appliquer à chacun des premier et second moyens formant support une déformation par courbure représentative de la valeur de ladite grandeur physique, lesdits premier et second moyens formant support comprenant au moins une partie formant un guide lumineux soumis à ladite déformation et présentant une première et une deuxième extrémité entre lesquelles ladite partie formant guide lumineux est sensiblement rectiligne, ladite partie formant guide lumineux comprenant un milieu susceptible de véhiculer la lumière et délimité par une paroi s'étendant entre lesdites deux extrémités, au moins une partie de ladite paroi présentant un pouvoir d'absorption lumineuse et/ou un pouvoir de diffusion lumineuse plus élevés que ledit milieu formant le guide ;

- au moins une source lumineuse pour appliquer un faisceau lumineux à la première extrémité de chaque guide lumineux ;

- des premier et second moyens optiquement disposés respectivement en regard de chacune desdites deuxièmes extrémités pour recueillir au moins une partie du faisceau lumineux transmis respectivement par les première et seconde parties formant guide lumineux ; et

- des moyens pour traiter les signaux recueillis pour en déduire une caractéristique de la défomration des moyens support.

17. Capteur selon la revendication 16, caractérisé en ce que ledit élément formant support comprend deux diaphragmes déformables parallèles entre eux lorsqu'ils sont au repos,en ce que ledit élément formant support comprend deux parties formant guide lumineux sensiblement rectilignes, lesdits guides lumineux étant solidaires chacun d'un diaphragme, et étant disposés selon des diamètres parallèles des diaphragmes, et en ce que les moyens de traitement sont aptes à effectuer la différence entre les signaux représentatifs d'une caractéristique des faisceaux recueillis.

18. Capteur optique selon la revendication 16, caractérisé en ce que chaque guide lumineux est constitué d'une plaque pleine en matériau transparent, présentant deux faces allongées et sensiblement parallèles entre elles, et fixée sur une des faces dudit support, et en ce que ladite portion de paroi externe dépolie et/ou revêtue d'un matériau absorbant comprend une seule des deux faces de ladite plaque.

19. Capteur selon la revendication 16, caractérisé en ce que chaque guide lumineux comporte une partie de paroi disposée selon l'axe longitudinal qui est dépolie, lesdites parties dépolies appartenant respectivement à la portion de paroi interne la plus proche du diaphragme et la plus éloignée du diaphragme.

0227556

FIG.1a

FIG.1b

FIG.3a

0227556

FIG. 3b

FIG. 3c

FIG. 4a

FIG. 4b

**FIG. 4c**

**FIG. 4d**

**FIG. 10a**

0227556

**FIG. 5**

88
84
82
99
96
P1    92
80a    80
98    80b    P2    94    100
86
90

**FIG.7**

84'
96    110a    112    99
110b    114    110
6'

**FIG. 8**

130b    130
96    130a    99

FIG. 6

0227556

# FIG. 9

FIG. 10 b

0227556

FIG.11a

FIG.11b

FIG. 11c

FIG.12

## FIG.13a

## FIG.13b

## FIG.14a

## FIG.14b

FIG.15a

FIG.15b

FIG.16a

FIG.16b

0227556

FIG.17a

FIG.17b

FIG.18a

FIG.18b

FIG.18c

0227556

## FIG.19

## FIG.20

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 544 636 (STANDARD TELEPHONES)<br>* Page 2, colonne de droite *<br><br>--- | 1,6,13 ,16 | G 01 D 5/26<br>G 01 F 1/32 |
| Y | US-A-4 440 027 (FORD MOTOR)<br><br>* Colonne 4, lignes 45-68 *<br><br>--- | 1,6,13 ,16 | |
| A | PATENT ABSTRACTS OF JAPAN, vol. 7, no. 48 (P-178)[1193], 24 février 1983; & JP-A-57 197 420 (FUJI DENKI SEIZO K.K.) 03-12-1982<br><br>--- | | |
| A | US-A-4 358 678 (HERSEY)<br><br>----- | | |

**DOMAINES TECHNIQUES RECHERCHES (Int. Cl.4)**

G 01 D
G 01 F

Le présent rapport de recherche a été établi pour toutes les revendications

| Lieu de la recherche | Date d'achèvement de la recherche | Examinateur |
|---|---|---|
| LA HAYE | 20-03-1987 | HOORNAERT W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82